# EUROPÄISCHE PATENTSCHRIFT

(11) **EP 2 598 849 B1**
(45) Veröffentlichungstag und Bekanntmachung des Hinweises auf die Patenterteilung: **13.04.2016**
(21) Anmeldenummer: 11730975.7
(22) Anmeldetag: 12.07.2011
(51) Int. Cl.: G01G 19/44, G01G 23/32, G01G 23/36

(54) **PERSONENWAAGE**
WEIGHING SCALES
PÈSE-PERSONNE

(30) Priorität: 28.07.2010 DE 102010038581
(43) Veröffentlichungstag der Anmeldung: 05.06.2013
(73) Patentinhaber: BSH Hausgeräte GmbH, 81739 München (DE)
(72) Erfinder: MAYERHOFER, Lukas, 83547 Babensham (DE); SCHÄFER, Hans, 81543 München (DE)
(86) Internationale Anmeldenummer: PCT/EP2011/061820
(87) Internationale Veröffentlichungsnummer: WO 2012/013487

(56) Entgegenhaltungen:
- WO-A2-2004/051201
- DE-A1- 3 037 500
- DE-U1-202009 012 748
- US-A1- 2007 274 160

## Beschreibung

Die vorliegende Erfindung betrifft eine Personenwaage mit einer Auftrittsfläche, auf welche sich die zu wiegende Person stellt.

Personenwaagen und insbesondere in der jüngsten Zeit auch Personenwaagen mit Messelektroden zur Messung körperspezifischer Eigenschaften, wie beispielsweise eines Körperfettanteils, eines Muskelanteils oder einer Knochenmasse, erfreuen sich aufgrund eines zunehmenden Körparbewusstseins zunehmender Beliebtheit. Neben einer einwandfreien Funktion spielt insbesondere in modernen Bädern aber auch ein Design derartiger Personenwaagen zunehmend eine Rolle. Besonders beliebt sind dabei Glitzereffekte, die insbesondere durch geschliffenes Glas bzw. geschliffenes Kristall erzeugt werden können.

So ist beispielsweise aus der WO 2004/051201 A1 eine Personenwaage mit einem Display mit einem beleuchteten Kristall bekannt. Die DE 20 2009 012 748 U1 offenbart eine Wägevorrichtung mit einer integrierten LED-Anzeige, die das Messergebnis durch das Gehäuse hindurch digital anzeigt. Die US 2007/0274160 A1 beschreibt eine elektronische Uhr mit einer Segmentanzeige mit LEDs, wobei Simili vor den Segmenten angeordnet sind, und diese von den Lichtquellen beleuchtet werden. Schließlich offenbart noch die DE 30 37 500 A1 eine Leuchtdiodenanordnung zur Anzeige großer Strukturen.

Die vorliegende Erfindung beschäftigt sich mit dem Problem für eine Personenwaage der gattungsgemäßen Art eine verbesserte Ausführungsform anzugeben, die sich Insbesondere durch eine neuartige und kostengünstige Anzeige auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, bei einer an sich bekannten Personenwaage unterhalb oder in einer Auftrittsfläche, auf welche sich zu wiegende Person üblicherweise zum Wiegen stellt, eine Vielzahl von Simili anzuordnen, wobei zumindest einige dieser Simili derart von unten beleuchtet werden können, dass diese eine visuell von oben ablesbare Information, insbesondere eine Gewichtsanzeige erzeugen. Im Vergleich zu einer bisher bekannten Segment-Anzeige lässt sich mit einer derartigen Anzeige aus beleuchteten und funkelnden Simili ein optisch äußerst ansprechendes Erscheinungsbild erzeugen, insbesondere lässt sich die Anzeige auch bei Dunkelheit problemlos ablesen, was bei bisherigen Segment-Anzeigen üblicherweise nicht möglich war. Die in die Personenwaage integrierten Simili dienen jedoch nicht ausschließlich der Gewichtsanzeige, sondern können, je nach Ausbildung der Personenwaage zusätzliche Informationen anzeigen, wie beispielsweise einen Körperfettanteil, einen Muskelanteit oder eine Knochenmasse der sich zu wiegenden Person. Durch die erfindungsgemäße Anordnung der Simili unterhalb oder innerhalb der Auftdttsfläche kann die neuartige und kostengünstige Anzeige erreicht werden, ohne dass sich die erfindungsgemäße Personenwaage haptisch anders anfühlt als herkömmliche Personenwaagen.

Erfindungsgemäß ist eine Blende vorgesehen, die eine isolierte Beleuchtung zumindest eines Similis ermöglicht. Eine derartige Blende hat insbesondere den Zweck, Streulicht und damit ein ungewolltes Erhellen umliegender Simili zu vermeiden, wobei die Blende gemäß der vorliegenden Erfindung zugleich Ausnehmungen bzw. Kavitäten aufweist, in welchen die Simili eingebettet sind, Dies hat den Vorteil, dass in diesem Fall die Simili nur eingelegt werden müssen, wodurch sich ein kostenaufwändiges Kleben vermeiden lässt. Durch eine farbliche Ausgestaltung der Blende und/oder eine vordefinierte Lichtdurchlässigkeit der Blende kann darüber hinaus Einfluss auf die visuell ausgegebene Anzeige genommen werden. Die aus Glas ausgebildete Auftrittsfläche vermeidet zudem eine Verschmutzung der Blende bzw. der darin/darauf angeordneten Simili, wodurch der optische Effekt, das heißt insbesondere ein Glitzern und Funkeln, lange erhalten bleiben. Jeder Blende ist dabei vorzugsweise eine Lichtquelle, beispielsweise eine Leuchtdiode, zugeordnet, wobei selbstverständlich auch denkbar ist, dass eine einzige Lichtquelle über einzelne Lichtleiter mit unterschiedlichen Blenden verbunden ist.

Zweckmäßig sind mehrere Leuchtdioden zur Beleuchtung der Simili vorgesehen. Derartige Leuchtdioden sind elektronische Halbleiter-Bauelemente, die einen Großteil der elektrischen Energie In Licht umsetzen und sich daher eklatant von herkömmlichen Glühbirnen unterscheiden. Bei herkömmlichen Glühbirnen wird ein Großteil der elektrischen Energie in Warme umgesetzt und geht dadurch für die Lichtleistung verloren. Zudem weisen LEDs eine deutlich höhere Lebensdauer als herkömmliche Glühbirnen auf und können in unterschiedlichsten Farben gefertigt werden, wodurch wiederum individuelle und reizvolle Lichteffekte erzielt werden können,

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

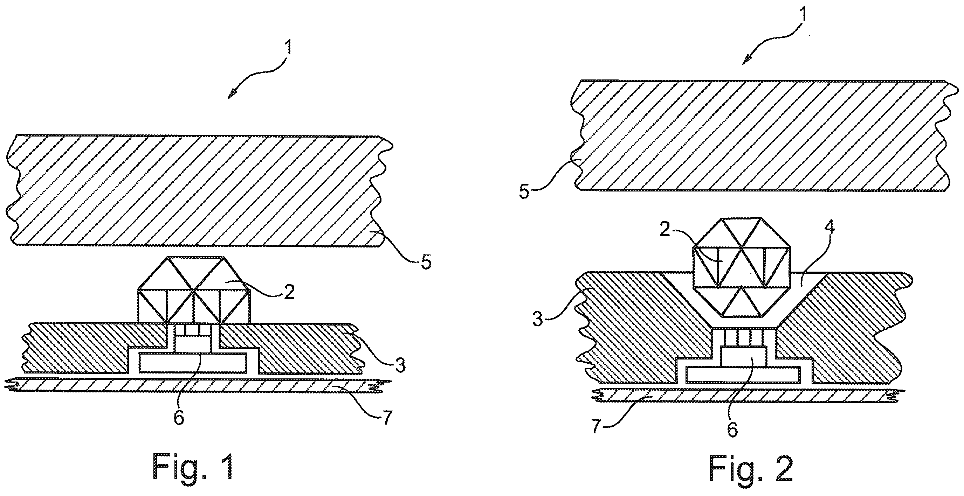

Die Erfindung ist in der Zeichnung (Fig. 2) dargestellt und wird in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch eine nicht erfindungsgemäße Personenwaage im Bereich eines Simills;
- Fig. 2: eine Schnittdarstellung durch eine erfindungsgemäße Personenwaage im Bereich eines Similis.

Entsprechend den Fig. 1 und 2, weist eine Personenwaage 1 eine Auftrittsfläche auf, auf welche sich die zu wiegende Person stellen kann. Unterhalb oder innerhalb dieser Auftrittsfläche sind eine Vielzahl von Simili 2, beispielsweise Strasssteine, Kristalle und/oder geschliffene Glaskörper, angeordnet, wobei zumindest einige dieser Simili 2 derart von unten zu beleuchten sind, dass diese eine visuell von oben ablesbare Information, insbesondere eine Gewichtsanzeige erzeugen. Darüber hinaus ist eine Blende 3 vorgesehen, die eine isolierte Beleuchtung zumindest eines Similis 2 ermöglicht und insbesondere Streulichteffekte und damit ein ungewolltes Erhellen umliegender Simili 2, verhindert. Erfindungsgemäß weist die Blende 3 dabel, wie gemäß der Fig. 2 gezeigt ist, eine Ausnehmung 4 auf, in welcher der Simili 2 zumindest teilweise aufgenommen ist. Denkbar ist hierbei auch, dass in diesem Fall der Simili 2 derart ausgebildet ist, dass er so in der Ausnehmung 4 der Blende 3 angeordnet werden kann, dass er oberflächenfluchtend zur Blende 3 angeordnet ist. In diesem Fall würde die Blende 3 mit ihrer Oberseite zugleich die Auftrittsfläche bilden. Alternativ kann oberhalb der Blende 3 eine transparente Glasplatte 5 angeordnet sein, die die eigentliche Auftrittsfläche bildet und zugleich die darunter angeordneten Simili 2 vor Beschädigung und/oder Verschmutzung schützt.

Zur Beleuchtung der einzelnen Simili 2 sind mehrere Lichtquellen, die insbesondere als Leuchtdioden 6 ausgebildet sind, vorgesehen. Derartige Leuchtdioden 6 bieten den großen Vorteil vergleichsweise wenig Energie zu benötigen, da sie die Energie hauptsächlich in Licht und nicht wie bisherige Glühbirnen in Wärme umsetzen. Zugleich können derartige Leuchtdioden 6 In nahezu allen beliebigen Farben hergestellt werden und dadurch individuell farbiges Licht erzeugen. Von besonderem Vorteil derartiger Leuchtdioden 6 ist darüber hinaus, dass diese eine Im Vergleich zu herkömmlichen Glühbirnen deutlich verlängerte Lebensdauer aufweisen. Die Leuchtdioden 6 können dabei beispielsweise als SMD-LED (Surface Mounted Light Emitting Diode) ausgebildet sein und dadurch eine vergleichsweise geringe Bauhöhe aufweisen. Derartige SMD-Leuchtdioden 6 werden zur Stromversorgung auf eine unterhalb der Blende 3 angeordnete Platine 7 aufgelötet.

Betrachtet man die beiden Bauformen gemäß den Figuren 1 und 2, so kann man erkennen, dass der Simili 2 gemäß der Fig. 1 oberhalb einer Oberfläche der Blende 3 angeordnet, insbesondere auf diese aufgeklebt ist. Im Gegensatz hierzu wird erfindungsgemäß der Simili 2 bei einer Personenwaage 1 gemäß der Fig. 2 in die Ausnehmung 4 durch ein einfaches Einlegen der Simili 2 in die Ausnehmung 4 eingesetzt.

Denkbar ist selbstverständlich auch, dass zumindest einige Simili 2 vorzugsweise ausschließlich zum Erzeugen designerischer Effekte, insbesondere zum Erzeugen von Glitzer-/Glanzeffekte, von unten zu beleuchten sind.

Prinzipiell kann die erfindungsgemäße Personenwaage 1 zusätzlich zur Erfassung des Gewichts auch zur Erfassung körperspezifischer Eigenschaften, wie beispielsweise eines Körperfettanteils, eines Muskelanteils oder einer Knochenmasse, ausgebildet sein und dadurch eine hohe Funktionalität aufweisen. Die Anzeige der ermittelten körperspezifischen Eigenschaften kann ebenfalls über die individuell beleuchtbaren Simili 2 erfolgen, wodurch ein besonderer optischer Reiz geboten wird. Mit der erfindungsgemäßen Personenwaage 1 lässt sich somit eine völlig neuartige Darstellung einer Anzeige erreichen, die zudem höchsten ästhetischen Ansprüchen genügt.

### Bezugszeichnliste

- 1: Personenwaage
- 2: Simili
- 3: Blende
- 4: Ausnehmung
- 5: Glasplatte
- 6: Leuchtdiode
- 7: Platine

## Patentansprüche

1. Personenwaage (1) mit einer Auftrittsfläche, auf welche sich die zu wiegende Person stellt, wobei unterhalb oder in der Auftrittsfläche eine Vielzahl von Simili (2) angeordnet sind, wobei zumindest einige der Simili (2) derart von unten beleuchtbar sind, dass diese eine visuell von oben ablesbare Information, Insbesondere eine Gewichtsanzeige, erzeugen, **dadurch gekennzeichnet, dass** eine Blende (3) vorgesehen ist, die eine isolierte Beleuchtung zumindest eines Similis (2) ermöglicht und dass die Blende (3) wenigstens eine Ausnehmung (4) zur Aufnahme zumindest eines Similis (2) aufweist, in die der Simili eingelegt ist.

2. Personenwaage nach Anspruch 1, **dadurch gekennzeichnet, dass** die Simili (2) als Strasssteine, Kristalle und/oder geschliffene Glaskörper ausgebildet sind.

3. Personenwaage nach Anspruch 1 oder 2, **dadurch gekennzeichnet,**
- **dass** die Blende (3) mit ihrer Oberseite zugleich die Auftrittsfläche bildet, wobei die Simili (2) oberflächenfluchtend in die Blende (3) eingelassen sind, oder
- **dass** die Auftrittsfläche durch eine über der Blende (3) angeordnete transparente Glasplatte (5) gebildet ist.

4. Personenwaage nach einem der Ansprüche 1 bis 3, **dadurch gekennzeichnet, dass** mehrere Leuchtdioden (6) zur Beleuchtung der Simili (2) vorgesehen sind.

5. Personenwaage nach Anspruch 4, **dadurch gekennzeichnet, dass** zumindest eine Leuchtdiode (6) als SMD-LED (surface mounted-Ligth-Emiting-Diode) ausgebildet ist.

6. Personenwaage nach Anspruch 4 oder 5, **dadurch gekennzeichnet, dass** die Leuchtdioden (6) auf einer Platine (7) befestigt sind, auf welcher die Leuchtdioden (6) umgebend auch die Blende (3) aufliegt.

7. Personenwaage nach einem der Ansprüche 1 bis 6, **dadurch gekennzeichnet, dass** die Personenwaage (1) zur Erfassung körperspezifischer Eigenschaften, wie beispielsweise eines Körpertettanteils, eines Muskelanteils oder einer Knochenmasse, ausgebildet ist.

8. Personenwaage nach einem der Ansprüche 1 bis 7, **dadurch gekennzeichnet, dass** zumindest einige Simili (2) vorzugsweise ausschließlich zum Erzeugen designerischer Effekte von unten zu beleuchten sind.

## Claims

1. Weighing scales (1) having a step-on surface, on which the person to be weighed stands, wherein a plurality of artificial gemstones (2) are arranged beneath or in the step-on surface, it being possible to illuminate at least some of said artificial gemstones (2) from below so that they produce information that can be read visually from above, in particular a weight indication, **characterised in that** a screen (3) is provided, which allows isolated illumination of at least one artificial gemstone (2) and that the screen (3) has at least one cutout (4) to hold at least one artificial gemstone (2), into which the artificial gemstone is inserted.

2. Weighing scales according to claim 1, **characterised in that** the artificial gemstones (2) are configured as rhinestones, crystals and/or ground glass pieces.

3. Weighing scales according to claim 1 or 2, **characterised in that**
- the top face of the screen (3) also forms the step-on surface, the artificial gemstones (2) being let into the screen (3) so that their surfaces are flush, or
- the step-on surface is formed by a transparent glass plate (5) arranged above the screen (3).

4. Weighing scales according to one of claims 1 to 3, **characterised in that** a number of light-emitting diodes (6) are provided to illuminate the artificial gemstones (2).

5. Weighing scales according to claim 4, **characterised in that** at least one light-emitting diode (6) is configured as an SMD-LED (surface **m**ounted **l**ight-**e**mitting **d**iode).

6. Weighing scales according to claim 4 or 5, **characterised in that** the light-emitting diodes (6) are fastened to a circuit board (7), on which the screen (3) also rests, enclosing the light-emitting diodes (6).

7. Weighing scales according to one of claims 1 to 6, **characterised in that** the weighing scales (1) are configured to capture body-specific properties, such as a body-fat ratio, muscle ratio or bone mass.

8. Weighing scales according to one of claims 1 to 7, **characterised in that** at least some artificial gemstones (2) are preferably to be illuminated from below, simply to produce designer effects.

## Revendications

1. Pèse-personne (1) comprenant un plateau sur lequel la personne à peser se place, plateau au-dessous ou dans lequel une pluralité de similis (2) sont disposées, au moins quelques-uns desdits similis (2) pouvant être éclairés par le bas de manière qu'ils produisent une information visuellement lisible par le haut, en particulier un affichage de poids, **caractérisé en ce qu'**il est prévu un cache (3) permettant un éclairage isolé d'au moins un simili (2) et **en ce que** ledit cache (3) comporte au moins un évidement (4) destiné à recevoir au moins un simili (2) et dans lequel le simili est placé.

2. Pèse-personne selon la revendication 1, **caractérisé en ce que** les similis (2) sont réalisés sous forme de pierres brillants de type strass, de cristaux et/ou de corps en verre taillé.

3. Pèse-personne selon la revendication 1 ou 2, **caractérisé en ce que**
- le cache (3) forme avec son côté supérieur en même temps le plateau, les similis (2) étant incrustés à fleur de surface dans le cache (3), ou
- le plateau est formé par une plaque de verre transparent (5) placée au-dessus du cache (3).

4. Pèse-personne selon l'une des revendications 1 à 3, **caractérisé en ce que** plusieurs diodes électroluminescentes (6) sont prévues pour éclairer les similis (2).

5. Pèse-personne selon la revendication 4, **caractérisé en ce qu'**au moins une diode électroluminescente (6) est réalisée sous forme de LED SMD (Surface Mounted Light Emitting Diode).

6. Pèse-personne selon la revendication 4 ou 5, **caractérisé en ce que** les diodes électroluminescentes (6) sont fixées sur une platine (7) sur laquelle repose aussi le cache (3) en entourant les diodes (6).

7. Pèse-personne selon l'une des revendications 1 à 6, **caractérisé en ce que** le pèse-personne (1) est conçu pour détecter des propriétés spécifiques du corps, par exemple un taux de graisse corporelle, une masse musculaire ou une masse osseuse.

8. Pèse-personne selon l'une des revendications 1 à 7, **caractérisé en ce qu'**au moins certains similis (2) sont à éclairer par le bas, de préférence exclusivement dans le but de créer des effets de design.
